## Europäisches Patentamt
## European Patent Office
## Office européen des brevets

(11) Veröffentlichungsnummer: **0 046 520**
**B1**

(12) **EUROPÄISCHE PATENTSCHRIFT**

(45) Veröffentlichungstag der Patentschrift:
**14.12.83**

(21) Anmeldenummer:.**81106053.2**

(22) Anmeldetag: **01.08.81**

(51) Int. Cl.³: **F 23 R 3/00**, B 22 F 5/00,
C 04 B 35/56

(54) **Keramische Brennkammer.**

(30) Priorität: **22.08.80 DE 3031689**

(43) Veröffentlichungstag der Anmeldung:
**03.03.82 Patentblatt 82/9**

(45) Bekanntmachung des Hinweises auf die Patenterteilung:
**14.12.83 Patentblatt 83/50**

(84) Benannte Vertragsstaaten:
**CH DE FR GB IT LI SE**

(56) Entgegenhaltungen:
**FR - A - 1 011 046
FR - A - 2 290 406
FR - A - 2 348 775
FR - A - 2 352 617
FR - A - 2 413 345
FR - A - 2 439 362
GB - A - 624 939
GB - A - 766 668
GB - A - 911 759**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Hüther, Werner, Dr.-Ing., Nikolaus-Lenau-Strasse 8, D-8047 Karlsfeld (DE)**

ACTORUM AG

Keramische Brennkammer

Die Erfindung bezieht sich auf eine keramische Brennkammer mit Lufteintrittsöffnungen, wie sie z.B. bei Gasturbinen zur Anwendung kommt. Solche keramische Brennkammern bestehen üblicherweise aus $Si_3N_4$ oder SiC. Es hat sich nun gezeigt, dass aufgrund der grossen Temperaturdifferenz zwischen der Aussenseite der Brennkammer und ihrer Innenseite insbesondere im Bereich der Lufteintrittsöffnungen Risse auftreten, die zur Zerstörung der Brennkammern führen.

Aufgabe der vorliegenden Erfindung ist es deshalb, eine gattungsgemässe Brennkammer zu schaffen, bei der durch konstruktive Gestaltung die auftretenden Wärmespannungen niedrig gehalten werden können.

Erfindungsgemäss wird diese Aufgabe dadurch gelöst, dass in der Zone der Lufteintrittsöffnungen die Brennkammerwand doppelwandig mit einem dazwischenliegenden Hohlraum ausgeführt ist.

Durch diese erfindungsgemässe Ausbildung lassen sich die thermisch bedingten Spannungen erheblich reduzieren, und es zeigt sich, dass die von den Lufteintrittsöffnungen ausgehenden Wärmerisse nicht mehr auftreten.

Bei einer bevorzugten Ausführungsform der Erfindung ist die Doppelwandigkeit auf den Randbereich der Lufteintrittsöffnungen begrenzt und jeweils durch in den Rand eingelassene Ringschlitze gebildet.

Vorzugsweise bei Brennkammern mit sehr eng beieinanderliegenden Lufteintrittsöffnungen wird die Doppelwandigkeit durch zwei mit Abstand ineinanderliegende und lediglich an einem Brennkammerende einstückig miteinander verbundene Schalen gebildet. Es können jedoch auch Mischformen vorteilhaft sein, bei denen einzelnen Teilbereiche der Brennkammerwand über die ganze Fläche doppelwandig ausgebildet sind, während in anderen Teilbereichen Ringschlitze um die Lufteintrittsöffnungen herum vorgesehen sind. Der Anteil der Doppelwandigkeit richtet sich nach den an der Brennkammer auftretenden mechanischen und thermischen Belastungen.

Im weiteren bezieht sich die Erfindung auf Verfahren zur Herstellung von keramischen Brennkammern der vorstehend bezeichneten Ausführung. Erfindungsgemässe Verfahren sind in den Patentansprüchen 4 und 5 vorteilhafte Ausgestaltungen der Verfahren in den Patentansprüchen 6 bis 8 angegeben.

Anhand der beigefügten Zeichnungen werden Ausführungsbeispiele von erfindungsgemässen Brennkammern sowie Verfahren zu deren Herstellung erläutert. In den Zeichnungen sind jeweils Mittellängsschnitte von Brennkammern bzw. Halbzeugen und den dazugehörigen Formen schematisch dargestellt. Es zeigt im einzelnen

Fig. 1 eine herkömmliche Brennkammer,

Fig. 2 eine erste Ausführungsform einer erfindungsgemässen Brennkammer,

Fig. 3 eine zweite Ausführungsform einer erfindungsgemässen Brennkammer,

Fig. 4 eine mit abnehmbarem Deckel versehene Pressform für die Einformung einer Brennkammer gemäss Fig. 2,

Fig. 5 die Pressform aus Fig. 4 bei abgenommenem Deckel,

Fig. 6 eine weitere Pressform wie in Fig. 4, jedoch etwas grösser,

Fig. 7 einen Pressling, wie er in der Pressform gemäss Fig. 6 erzeugt wurde,

Fig. 8 eine Spritzgussform zur Herstellung einer Brennkammer nach Fig. 2, und

Fig. 9 einen fertigen, aus der Spritzgussform nach Fig. 8 entnommenen Pressling einer Brennkammer.

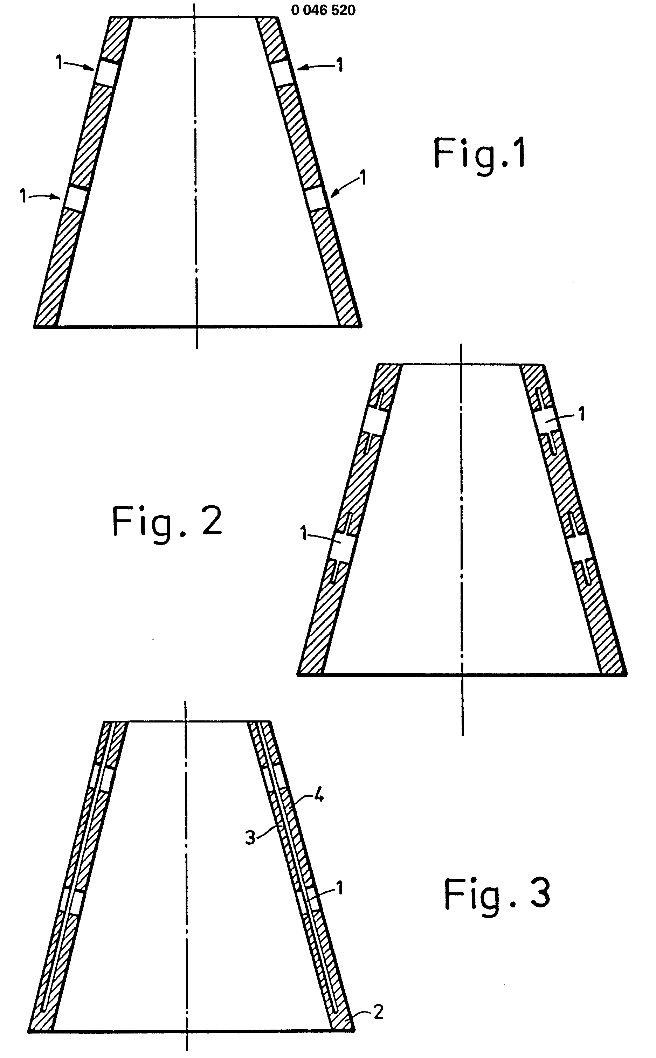

Die in Fig. 1 im Längsschnitt dargestellte konische Brennkammer weist in der Brennkammerwand in herkömmlicher Weise Lufteintrittsöffnungen 1 auf. Im Gegensatz zu der in Fig. 1 dargestellten Brennkammer ist bei der in Fig. 2 gezeigten Brennkammer in der Zone der Lufteintrittsöffnungen 1 die Brennkammerwand doppelwandig ausgeführt, wobei die Doppelwandigkeit auf den Randbereich der Lufteintrittsöffnungen begrenzt ist und jeweils durch in den Rand eingelassene Ringschlitze gebildet wird. Bei der in fig. 3 dargestellten Brennkammer erstreckt sich die Doppelwandigkeit nahezu über die ganze Brennkammer, indem zwei mit Abstand ineinanderliegende lediglich an einem Brennkammerende 2 einstückig miteinander verbundene Schalen 3, 4 vorgesehen sind, zwischen denen ein Luftschacht gebildet ist.

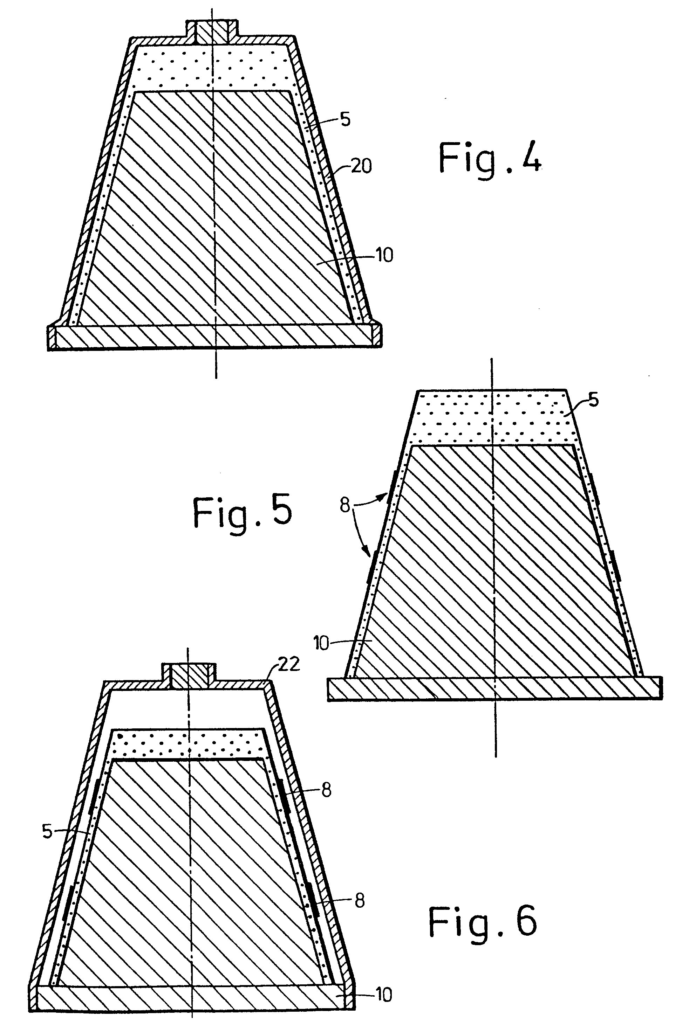

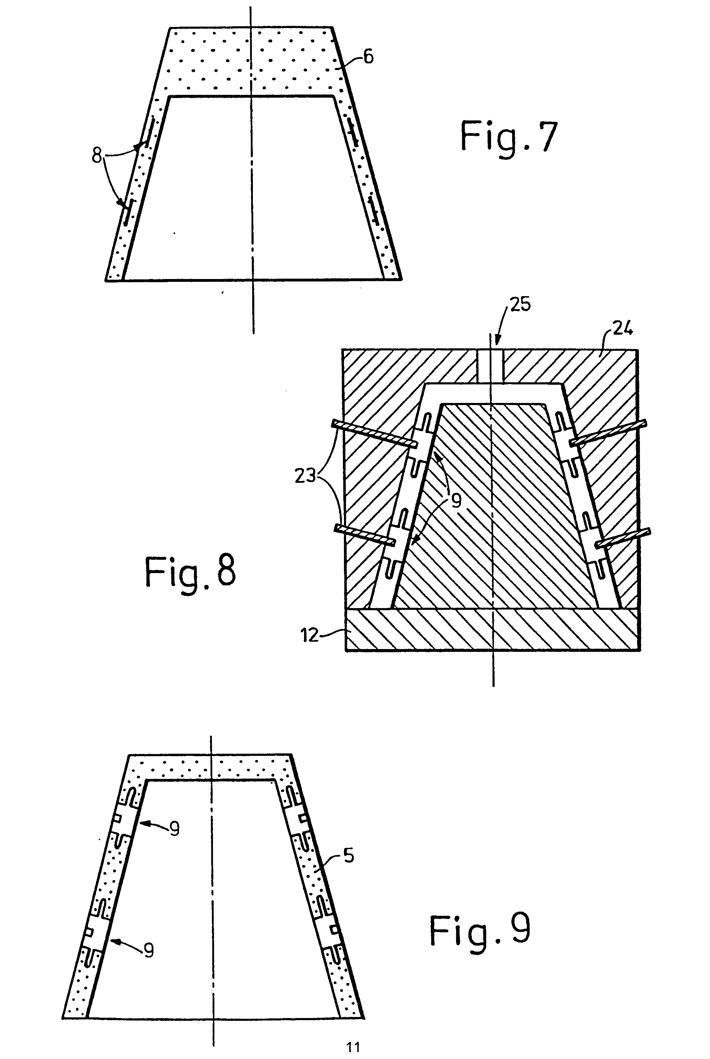

Anhand der Fig. 4 bis 7 wird ein erstes erfindungsgemässes Herstellverfahren für eine der in Fig. 2 oder 3 dargestellten Brennkammern erläutert. Bei diesem Verfahren wird ein Grünling durch isostatisches Pressen hergestellt. In einem ersten Schritt wird das Ausgangspulver (Si-Metallpulver für $Si_3N_4$ oder sinterfähiges SiC-Pulver versehen mit organischem Bindemittel) in eine aus einem festen Kern 10 und einem gummielastischen Deckel 20 bestehende Pressform eingefüllt, die Form verschlossen und bei Drucken von 100 bis 1500 bar gepresst. Der so entstandene Pressling 5 wird der Form entnommen, und es werden verlorene Kerne 8 bzw. Zwischenschichten, die aus Papier oder Kunststoff bestehen, auf die Aussenseite des Presslings 5 dort aufgeklebt, wo Doppelwandigkeit der fertigen Brennkammer gewünscht wird (vgl. Fig. 5). Der so präparierte Pressling 5 wird nun in eine zweite Pressform eingebracht, deren Kern 10 derselbe sein kann, wie in Fig. 4 bzw. Fig. 5 dargestellt, deren gummielastischer Deckel 22 jedoch entsprechend der noch fehlenden Wandstärke grösser ist als der Deckel 20 in Fig. 4. Nach Einfüllen des gleichen Pulvers wie beim ersten Verfahrensschritt wird die Form geschlossen, und es wird erneut gepresst, wobei Drucke von 1000 bis 4000 bar angewendet werden. Wegen der grösseren Verdichtung beim zweiten Pressen ergibt sich eine innige Verbindung des vorgeformten inneren Presslings mit der äusseren Schüttung. Es entsteht ein Pressling 6, wie er in Fig. 7 gezeigt ist. Bei Temperaturen bis etwa 600° C erfolgt dann das Ausbrennen von Bindemitteln aus dem Keramikpulver und gleichzeitig das Verbrennen oder Ausdampfen der Kerne 8. Danach wird bei 1900 bis 2300° C im Fall von SiC-Pulver gesintert bzw. bei 1100 bis 1700° C in $N_2$-Atmosphäre nitriert. Als nächster Schritt erfolgt dann das Einbringen der Lufteintrittsöffnungen an den doppelwandig ausgebildeten Stellen der Brennkammerwand, was vorzugsweise mittels Ultraschall, Elektroerosion oder Schleifen durchgeführt wird. Schliesslich ist die entstandene Brennkammer nur mehr einem Fertigbearbeitungsgang zu unterziehen.

Zur Erleichterung des Einbringens der Lufteintrittsöffnungen ist es vorteilhaft, wenn der Sinter- bzw. Nitrierprozess in zwei Stufen durchgeführt wird, wobei die erste vor dem Eindringen der Lufteintrittsöffnungen erfolgt, die zweite danach. In diesem Fall folgt auf das Ausbrennen des Bindemittels bzw. des Kernmaterials ein Ansintern bei 1400 bis 1800° C für eine Zeitdauer von 10 bis 30 min bzw. ein Vornitrieren im Falle eines Siliziumpulverpresslings bei 1100 bis 1300° C während einer Zeitdauer von 10 min bis 3 h. Nach diesem ersten Sinter- bzw. Nitrierungsschritt erfolgt dann das Einsenken der Lufteintrittsöffnungen und danach ein Fertigsintern bzw. Fertignitrieren bei den weiter oben angeführten Temperaturen. Danach schliesst sich ein Fertigbearbeitungsprozess an.

Bei einem zweiten vorteilhaften Herstellungsverfahren erfindungsgemässer Brennkammern erfolgt die Herstellung des Grünlings unter Verwendung des Spritzgussverfahrens. Bei diesem Verfahren wird das mit einem geeigneten temporären Binder versetzte Ausgangspulver (Si oder SiC) in eine aus einem beweglichen Teil 12 und einem ortsfesten Teil 24 bestehende Spritzgussform eingebracht (vgl. Fig. 8). Ein Anguss 25 ist in dem ortsfesten Formteil 24 vorgesehen. Um die gewünschte Doppelwandigkeit zu erreichen, werden in die Spritzgussform Kerne 9 bestehend aus Kunststoff, wie z.B. Polyäthylen, Cellulose oder Polystyrol eingelegt. Die Positionierung der Kerne 9 erfolgt bei der Ausführungsform nach Fig. 8 mit Hilfe von axial beweglichen Schiebern 23, die beim Einspritzen der Masse in Ausnehmungen der Kerne 9 hineinragen. Nach einem Vortrocknen wird der Grünling, wie er in Fig. 9 dargestellt ist, der Spritzgiessform 12, 24 entnommen. Die thermische Behandlung des Grünlings erfolgt, wie oben geschildert, indem zunächst das Bindemittel und die Kernmasse ausgebrannt wird und dann gesintert bzw. nitriert wird. Nach diesen Verfahrensschritten ist nur mehr eine Fertigbearbeitung notwendig, da die Lufteintrittsöffnungen bereits vorhanden sind.

## Patentansprüche

1. Keramische Brennkammer mit Lufteintrittsöffnungen, dadurch gekennzeichnet, dass in der Zone der Lufteintrittsöffnungen die Brennkammerwand doppelwandig mit einem dazwischenliegenden Hohlraum ausgeführt ist.

2. Keramische Brennkammer nach Anspruch 1, dadurch gekennzeichnet, dass die Doppelwandigkeit auf den Randbereich der Lufteintrittsöffnungen begrenzt ist und jeweils durch in den Rand eingelassene Ringschlitze gebildet wird.

3. Keramische Brennkammer nach Anspruch 1, dadurch gekennzeichnet, dass die Doppelwandigkeit durch zwei mit Abstand ineinanderliegende und lediglich an einem Brennkammerende einstückig miteinander verbundene Schalen gebildet wird.

4. Verfahren zur Herstellung einer keramischen Brennkammer nach den Ansprüchen 1 bis 3, gekennzeichnet durch folgende Verfahrensschritte:
a) Vorformung einer inneren grünen Keramikschale durch Pressung von metallischem Si-Pulver oder sinterfähigem SiC-Pulver und Bindemittel bei 100 bis 1500 bar,
b) Aufbringen von verlorenen Kernen bzw. Zwischenschichten auf die innere Keramikschale,
c) Aufbringen oder Aufformen einer äusseren grünen Keramikschale aus dem gleichen Pulver wie unter a,
d) Kompaktieren des Formlings bei Drucken von 1000 bis 4000 bar,
e) Ausbrennen von Bindemitteln und Kernmaterial bei Temperaturen bis etwa 600° C,
f) Sintern bei 1900 bis 2300° C bzw. Nitrieren bei 1100 bis 1700° C in $N_2$-Atmosphäre,
g) Einbringen der Lufteintrittsöffnungen vorzugsweise durch Ultraschall, Elektroerosion oder Schleifen, und
h) Fertigbearbeiten der Brennkammer.

5. Verfahren zur Herstellung einer keramischen Brennkammer nach den Ansprüchen 1 bis 3, gekennzeichnet durch folgende Verfahrensschritte:
a) Formung eines Grünlings der Brennkammer nach dem Spritzgussverfahren unter Verwendung von metallischem Si-Pulver oder sinterfähigem SiC-Pulver und eines geeigneten temporären Binders und unter Verwendung von Kunststoffkernen, die die Hohlraumkontur und die Kontur der Lufteintrittsöffnungen aufweisen,
b) Ausbrennen von Bindemittel und Kernmaterial,
c) Sintern bei 1900 bis 2300° C bzw. Nitrieren bei 1100 bis 1700° C in $N_2$-Atmosphäre, und
d) Fertigbearbeiten der Brennkammer.

6. Verfahren nach Anspruch 4, dadurch gekennzeichnet, dass als Material für die verlorenen Kerne bzw. Zwischenschichten Papier oder ein Kunststoff verwendet wird, der bei der Ausbrenntemperatur verbrennt oder abdampft.

7. Verfahren nach Anspruch 4, dadurch gekennzeichnet, dass der Sinter- bzw. Nitrierprozess in zwei Stufen durchgeführt wird, wobei die erste vor dem Einbringen der Lufteintrittsöffnungen erfolgt, die zweite danach.

8. Verfahren nach Anspruch 5, dadurch gekennzeichnet, dass als Kernmaterial Polyäthylen, Cellulose oder Polystyrol verwendet wird.

## Claims

1. Ceramic combustion chamber having air entry ports, characterized in that the combustion chamber wall is made double-walled in the air entry port zone with a cavity between walls.

2. Ceramic combustion chamber of claim 1, characterized in that the double-walled condition is limited to the rim area of the air entry ports and in that it is formed by annular slots recessed into the rim.

3. Ceramic combustion chamber of claim 1, characterized in that the double-walled condition is formed by two spaced-apart telescoped shells connected together to form a single piece at one end of the combustion chamber only.

4. Method for manufacturing a ceramic combustion chamber in accordance with claims 1 to 3, characterized by the following process operations:
   (a) preform an inner green ceramic shell by compressing metallic Si powder or sinterable SiC powder and binders at 100 to 1500 bar;
   (b) apply lost cores or intermediate layers on the inner ceramic core;
   (c) apply or form an outer green ceramic shell from the same powder as in a;
   (d) compact the preform at pressures of 1000 to 4000 bar;
   (e) burn out binders and core material at temperatures to about 600° C;
   (f) sinter at 1900 to 2300° C, or nitride at 1100 to 1700° C in an $N_2$ atmosphere;
   (g) incorporate the air entry ports by preferably ultrasonic, electrical discharge machining or grinding process, and
   (h) machine-finish the combustion chamber.

5. Method for manufacturing a ceramic combustion chamber in accordance with claims 1 to 3, characterized by the following process operations:
   (a) make a preform of the combustion chamber by the injection moulding process using metallic Si powder or sinterable SiC powder and a suitable temporary binder, and using plastic cores exhibiting the cavity contour and the contour of the air entry ports;
   (b) burn off the binders and core material;
   (c) sinter at 1900 to 2300° C or nitride at 1100 to 1700° C in an $N_2$ atmosphere, and
   (d) machine-finish the combustion chamber.

6. Method of claim 4, characterized in that the material used for the lost cores or intermediate layers is paper or plastic which at the burn-off temperature will burn or vaporize.

7. Method of claim 4, characterized in that the sintering of nitriding process is achieved in two steps, of which the first takes place before the air entry ports are incorporated, and the second thereafter.

8. Method of claim 5, characterized in that polyethylene, cellulose or polystyrol is used as a core material.

## Revendications

1. Chambre de combustion en céramique avec des orifices d'entrée d'air, caractérisée en ce que, dans la zone des orifices d'entrée d'air, la paroi de la chambre de combustion est à double paroi séparée par un volume creux intermédiaire.

2. Chambre de combustion en céramique selon la revendication 1, caractérisée en ce que la double paroi est limitée à la zone du bord des orifices d'entrée d'air, et est chaque fois formée par des fentes annulaires réalisées dans le bord.

3. Chambre de combustion en céramique selon la revendication 1, caractérisée en ce que la double paroi est formée par deux coquilles, placées l'une dans l'autre à une certaine distance, qui ne sont reliées en une seule pièce qu'au niveau d'une extrémité de la chambre de combustion.

4. Procédé pour la réalisation d'une chambre de combustion en céramique selon les revendications 1 à 3, caractérisé par les opérations suivantes:
   a) moulage préalable d'une coquille intérieure en matière céramique non cuite, par pressage de poudre métallique Si ou de poudre frittable SiC et d'un agent de liaison à une pression comprise entre 100 et 1500 bar;
   b) application de noyaux perdus ou de couches intermédiaires sur la coquille interne en céramique;
   c) application ou moulage d'une coquille extérieure en céramique non cuite, à l'aide de la même poudre que sous le point a;
   d) compactage de l'ébauche à des pressions comprises entre 1000 et 4000 bar;
   e) élimination par combustion des agents de liaison et de la matière des noyaux, à des températures allant jusqu'à environ 600° C;
   f) frittage à 1900-2300° C ou nitruration à 1100-1700° C dans une atmosphère de $N_2$;
   g) réalisation des orifices d'entrée d'air de préférence par des ultra-sons, par électro-érosion ou par meulage, et
   h) usinage de finition de la chambre de combustion.

5. Procédé de réalisation d'une chambre de combustion en matière céramique selon les revendications 1 à 3, caractérisé par les étapes de procédé suivantes:
   a) moulage d'une ébauche non cuite de chambres de combustion, selon le procédé d'injection, en utilisant de la poudre métallique Si ou de la poudre frittable SiC, et d'un agent de liaison temporaire approprié, avec utilisation de noyaux en matière synthétique qui présentent le contour du volume creux et le contour des orifices d'entrée d'air;
   b) élimination par combustion de l'agent de liaison et de la matière céramique;
   c) frittage à des températures de 1900-2300° C ou nitruration à des températures de 1100-1700° C dans une atmosphère de $N_2$, et
   d) usinage de finition de la chambre de combustion.

6. Procédé selon la revendication 4, caractérisé en ce que, comme matériau pour les noyaux perdus ou les couches intermédiaires, on utilise du papier ou une matière synthétique qui brûle ou se vaporise aux températures d'élimination par combustion.

7. Procédé selon la revendication 4, caractérisé en ce que le procédé de frittage ou de nitruration est effectué en deux étapes, la première s'établissant avant l'introduction des orifices d'entrée d'air et la seconde postérieurement.

8. Procédé selon la revendication 5, caractérisé en ce que, comme matière pour les noyaux, on envisage le polyéthylène, la cellulose ou le polystyrène.

0 046 520

Fig.1

Fig. 2

Fig. 3

0 046 520

Fig.4

Fig.5

Fig.6

9

Fig.7

Fig.8

Fig.9